Europäisches Patentamt

European Patent Office

Office européen des brevets

(19)

(11) EP 0 570 557 B1

(12) **EUROPÄISCHE PATENTSCHRIFT**

(45) Veröffentlichungstag und Bekanntmachung des Hinweises auf die Patenterteilung:
**10.03.1999 Patentblatt 1999/10**

(21) Anmeldenummer: **92924664.3**

(22) Anmeldetag: **04.12.1992**

(51) Int Cl.6: **G06F 1/14**

(86) Internationale Anmeldenummer:
**PCT/EP92/02805**

(87) Internationale Veröffentlichungsnummer:
**WO 93/11481 (10.06.1993 Gazette 1993/14)**

(54) **VERFAHREN ZUR ERZEUGUNG EINER SYSTEMZEITBASIS IN EINER ANLAGE MIT VERTEILTEN RECHNEREINHEITEN**

PROCESS FOR GENERATING A COMMON TIME BASE FOR A SYSTEM WITH DECENTRALISED COMPUTING UNITS

PROCEDE DE GENERATION D'UNE BASE DE TEMPS COMMUNE DANS UN SYSTEME A UNITES INFORMATIQUES DECENTRALISEES

(84) Benannte Vertragsstaaten:
**DE ES FR GB IT NL PT SE**

(30) Priorität: **04.12.1991 DE 4140017**

(43) Veröffentlichungstag der Anmeldung:
**24.11.1993 Patentblatt 1993/47**

(73) Patentinhaber: **NEC Corporation
Minato-ku, Tokyo 108-01 (JP)**

(72) Erfinder: **TURSKI, Klaus
D-4000 Düsseldorf 11 (DE)**

(74) Vertreter: **Glawe, Delfs, Moll & Partner
Patentanwälte
Postfach 26 01 62
80058 München (DE)**

(56) Entgegenhaltungen:
**WO-A-90/13078          US-A- 4 866 606
US-A- 4 890 222**

## Beschreibung

Die Erfindung betrifft ein Verfahren zum Betreiben von über einen Datenbus durch seriellen Datenaustausch miteinander kommunizierenden Rechnereinheiten, von denen jede ein eigenes Zeitgebersystem aufweist, wobei die Rechnereinheiten über den Datenbus Zeitinformationen austauschen.

Datenverarbeitungsanlagen mit verteilten Rechnerknoten oder Rechnereinheiten, die über einen seriellen Daten-Bus verbunden sind, finden überwiegend in industriellen und automobilen lokalen Netzen Anwendung. Die Rechnerknoten umfassen dabei Datenverarbeitungsgeräte oder Signalverarbeitungsgeräte, die zu einer bestimmten Anwendung bestimmt sind. Hierzu zählt der Datenaustausch zwischen Steuergeräten. Sensoren und Stellern. Deartige lokale Netze arbeiten meist unter Echtzeitbedingungen, d.h. Rechenoperationen und Steuereingriffe müssen prozeßbegleitend in bestimmten Zeitfenstern erfolgen, so daß die zeitliche Verfügbarkeit der Daten gewährleistet ist. Die jeweiligen Prozeßparameter müssen dabei rechtzeitig zu den einzelnen Rechnerknoten übertragen werden, um einen optimalen Prozeßablauf zu gewährleisten. Für ein lokales Netzwerk bedeutet dies, daß die Rechnerknoten ausreichende Verarbeitungskapazität zur Verfügung stellen.

Bei der Datenübertragung unterscheidet man grundsätzlich zwischen sogenannten "broadcast"-Systemen und "Punkt-zu-Punkt"-Systemen. Bei "broadcast"-Systemen gibt ein Knoten seine Daten auf den Bus und alle anderen Knoten können mithören. Bei einer "Punkt-zu-Punkt"-Verbindung können jeweils nur zwei Knoten definiert miteinander in Verbindung treten, indem einer angewählt wird.

Ein Beispiel für die oben definierten Datenverarbeitungsanlagen ist das Controller-Aerea Network (CAN), das ein de-facto Standardprotokoll festlegt. CAN ist dem open system interconnection (OSI)-Referenzmodell angelehnt, das für offene Systeme empfohlen wird, die jederzeit um weitere Teilnehmer bzw. Rechnerknoten erweitert werden können. CAN unterscheidet verschiedene Ebenen, wie die physikalische Ebene. die Transferebene und die Objektebene.

Die pysikalische Ebene definiert im wesentlichen, wie Signale übertragen werden. Parameter dazu sind das Übertragungsmedium, die Signalpegel und das Timing, die Transferrate und die Bitdarstellung. Die Transferebene enthält den Kern des CAN-Protokolls. Sie bildet das Bindeglied zwischen der Objektebene und der physikalischen Ebene und ist verantwortlich für das Bit-Timing, die Festlegung des Objekt- bzw. Botschaftsrahmens, Übertmgungsbestätigungen, Fehlererkennung und -Behandlung sowie für die Arbitrierung, d,h. die Konfliktlösung, wenn mehrere Rechnerknoten gleichzeitig Zugriff auf den Bus nehmen. Die Objektebene schließlich ist verantwortlich für die Objekt- bzw. Botschaftsfilterung sowie für die Behandlung der Objekte, die einer übergeordneten Anwendungsebene zugeordnet sind. Objekte bzw. Botschaften werden dabei in beiden Richtungen von und zu verschiedenen Anwendungsebenen über den Bus und jeweils zwischen geschaltete physikalische Ebenen, Transferebenen und Objektebenen übertragen. Die physikalische Ebene und die Objektebene können abhängig von der jeweiligen Implementierung variieren. Die Transferebene ist dagegen durch das Protokoll definiert.

Die Grundidee des CAN basiert auf der Vorstellung eines gemeinsamen virtuellen Datenspeichers für alle Knoten einer oben definierten Datenverarbeitungsanlage, bei dem das Netzwerk durch seinen Aufbau die Aufgabe übernimmt, die Daten dieses gemeinsamen virtuellen Speichers zu aktualisieren. Nach dem Protokoll werden die von einem Rechnerknoten über das Netz zu übertragenden Daten zu Mitteilungen bzw. Objekten zusammengefaßt, die einem Datenrahmen entsprechen. Im Datenrahmen sind verschiedene Felder definiert, die beispielsweise den Beginn und das Endes des Rahmens angeben und das eigentliche Datenfeld festlegen. Jedes Objekt, das durch den Datenrahmen festgelegt ist. enthält nach einem Startbit des Rahmens einen Kopfteil (Identifier), der dominant oder rezessiv ist und den Datennamen und eine Priorität des Objekts festlegt. durch die der Zugang zum Bus bestimmt wird. Der Wert des Kopfteils bestimmt also die kollisionsfreie Arbitrierung auf dem Netzwerk. Das bedeutet, daß es Nachrichten gibt, die vor anderen Vorrang haben. Nach dem CAN-Protokoll ist der Kopfteil 11 Bit lang.

Die über den Bus zu übertragenden Mitteilungen bzw. Objekte müssen innerhalb eines Rechnerknotens verwaltet werden. Die Übertragung selbst ist dabei eine Breitbandübertragung, d.h. ohne Adressierung eines bestimmten Empfangsknotens. Ein auf dem Bus zu übertragendes Objekt gelangt deshalb zunächst an sämtliche potentielle Empfänger. die dann entscheiden müssen, welche Botschaften bzw. Objekte aus dem Nachrichtenstrom jeweils empfangen werden sollen. Das Herausfiltern der jeweils wichtigen Objekte aus dem Nachrichtenstrom erfolgt anhand der Kopfteile der Objekte.

Für die in der Objektebene stattfindende Filterung der Objekte auf Akzeptanz und die Beurteilung der Priorität sind Steuerungseinrichtungen bekannt, die nach verschiedenen Optimierungsansätzen arbeiten. Ein Beispiel für eine sogenannte Voll-CAN-Implementierung ist aus der DE-PS 35 06 118 bekannt. Die implementierte Objektebene führt die gesammte Daten- bzw. Objektverwaltung auf dem Netz unabhängig von der angeschlossenen Zentraleinheit (CPU) des Rechnerknotens aus. Bei der Basis-CAN-Implementierung übernimmt die in der elektronischen Kontrolleinheit enthaltene Zentraleinheit die gesamte Objektverwaltung.

Eine derartige Datenverarbeitungsanlage mit verteilten Rechnerknoten findet z.B. Verwendung in Echtzeitsystemen wie Steuer- und Regelsystemen. Die Elemente eines Regelkreises wie Sollwert-Geber, Istwert-Geber. Regler und Stellglied bilden verteilte Komponenten bzw. verteilte Rechnerknoten der Datenverarbeitungsanlage. Unter Istwert-Geber ist dabei beispielsweise ein Sensor und Unterstellglied ein Aktuator zu verstehen, der auf die Regelstrecke wirkt. Die notwendigen, im Regelkreis zu übertragenden Daten, werden in der Datenverarbeitungsanlage über den Daten-Bus übertragen. Jeder Rechnerknoten speichert dabei die ihm zugeordneten empfangenen Informationen. Das dynamische Verhalten des Regelkreises wird beispielsweise durch Abtastraten und Verzögerungszeiten von Sensor- und Aktuatorsignalen beeinflußt. Verzögerungen von Sensor- oder Aktuatorsignalen stellen sich im dynamischen Verhalten als Totzeiten dar, die in Regelkreisen grundsätzlich unerwünscht sind. Totzeiten können beispielsweise dazu führen, daß die gesamte Regelstrecke instabil wird oder zumindest in ihrer Regelgüte einbüßt. Eine derartige Verschlechterung des dynamischen Regel verhaltens kann jedoch in vielen Fällen bei Kenntnis der auftretenden Verzögerungszeiten durch eine Adaption der Regelparameter ausgeglichen werden.

In einem zentralen System sind die Regelkreiskomponenten in einer Einheit konzentriert und die ausführende Recheneinheit arbeitet mit einer einheitlichen Zeitbasis. Deshalb können Verzögerungs- bzw. Totzeiten bestimmt und bei der Abarbeitung des Regelalgorithtmus berücksichtigt werden. Bei einer Daten verarbeitunesanlage der eingangs genannten Art mit einem verteilten System besitzen die einzelnen Komponenten jedoch im allgemeinen eine eigene Taktversorgung. Jede Taktversorgung enthält einen Oszillator. der üblicherweise bezogen auf die anderen Komponenten bzw. Rechnerknoten asynchron arbeitet. Eine gemeinsame Zeitbasis. die beispielsweise durch eine zentrale Taktversorgung geschaffen werden könnte, scheidet in den meisten Fällen aus technischen und wirtschaftlichen Gründen aus. beispielsweise um ausreichende elektromagnetische Verträglichkeit (EMV) zu gewährleisten, da bei hochfrequenten Taktsignalen elektromagnetische Abstrahlungen in die Umgebung stattfinden, oder um den Verkabelungsaufwand gering zu halten.

Bei einer verteilten Datenverarbeitungsanlage ergibt sich deshalb das Problem, daß ein Empfangsknoten aufgrund der unterschiedlichen lokalen Zeitbasen der einzelnen Rechnerknoten nicht in der Lage ist, die Zeit zwischen der Erzeugung beispielsweise eines Sensorsignals und seiner Verarbeitung zu bestimmen. Dies gilt selbst in dem Fall, daß der signalgenerierende Rechnerknoten neben dem Signalwert zusätzlich den Zeitwert der Signalerzeugung übermitteln würde, weil der Empfangsknoten die Zeitbasis des übermittelten Zeitwerts nicht kennt.

In der Veröffentlichung IEEE Transactions of Computers Vol. C-36; No. 8, August 1987, pp. 933-940 sind für Zeitfehler fünf verschiedene Ursachen genannt. Es sind dies:

a) die Zeit, die vom lesen der eigenen Uhr in einem sendenden Knoten bis zur Absendung einer Synchronisiernachricht vergeht,
b) die unbestimmbare Zugriffszeit eines Knotens zum Bus (Arbitrationszeit),
c) die Übertragungszeit im sendenden Knoten, auf dem Bus und im empfangenden Knoten,
d) die Zeit, die in einem empfangenden Knoten vom Empfang der Synchronisationsnachricht bis zum Festhalten, d. h. Speichern des Empfangszeitpunktes vergeht, und
e) die Granulationszeit, d. h. die Zeit, die zur Auflösung der Zeitinformation durch das Raster erforderlich ist.

Die Druckschrift macht keine Aussage darüber, wie die Synchronisationsnachrichten von einem Knoten über den Bus auf den anderen Knoten übertragen und wie sie festgehalten werden. Es werden Überlegungen angestellt, welche Genauigkeit ein globales Zeitsystem erreichen kann, wenn die vorstehend genannten Fehler vorausgesetzt werden. Als Ergebnis wird festgestellt, daß die lokale Zeit in jedem Knoten aufgrund eines zu berechnenden Korrekturwertes entweder unverzüglich korrigiert werden kann oder daß eine kontinuierliche Korrektur während der nächsten Synchronisierperiode vorgenommen werden kann. Das bedeutet, daß eine linear ansteigende Kurve, die die Abhängigkeit eines Zählerstandes von der Zeit repräsentiert, im Hinblick auf die durch Berechnung ermittelte Masterzeit entweder einen Sprung macht oder einen Steigungsknick derart hat, daß sich Kurven des Masters und der lokalen Zeit zu einem späteren Zeitpunkt treffen.

Es ist denkbar, eine gemeinsame Zeitbasis für alle Knoten auf zweierlei Weise zu erreichen. Die erste Möglichkeit kan darin bestehen, daß der Uhrenstand eines sendenden Knotens gleichzeitig mit einer Nachricht, die ein Synchronisationsaufruf sein kann, an die anderen Knoten übertragen wird. Diese Methode ist sehr kompliziert. Nach einem Startimpuls muß zunächst abgewartet werden, ob gesendet werden kann. Wenn dies der Fall ist, muß der genommene Zeitwert noch korrigiert werden. Die zweite Möglichkeit besteht darin, daß im sendenden Knoten die Uhr auf Null gestellt wird und dieses Ereignis gleichzeitig an die übrigen Knoten weitergegeben wird. Diese zweite Methode ist insofern problematisch, als ungewiß ist, ob der Bus zu dem Zeitpunkt frei ist, an dem die interne Uhr des sendenden Knotens gestellt werden soll. Zur Lösung dieses Problems muß der Zeitnachricht die höchste Priorität eingeräumt werden.

Die Möglichkeit, die einzelnen Rechnerknoten durch ein gemeinsames Zeitsignal zu synchronisieren, das auf dem Bus übertragen wird, scheidet in der Regel aus, weil dies mit der Schwierigkeit verbunden ist, daß Störungen auf dem Bus von den Rechnerknoten als Synchronisationssignal gewertet werden können.

In verteilten Datenverarbeitungsanlagen der eingangs genannten Art ist deshalb eine Zeitsynchronisation nicht vorgesehen. Beispielsweise liefern bei bekanten CAN-Netzwerken die Implementierungen von CAN-Controllern keine zeitlichen Informationen aus der Transferebene nach außen.

Der Rechnerknoten, d.h. im wesentlichen die zentrale Prozessoreinheit (CPU) gibt bei Botschaften, die von dem Knoten abgesendet werden sollen, lediglich ein Absendekommando an die Objektebene. Diese Ebene führt den Sendeauftrag autonom entsprechend der vorgesehenen Priorisierung der Botschaft durch, ohne der Recheneinheit Informationen über den exakten Zeitpunkt der Absendung der Botschaft zur Verfügung zu stellen. Das bedeutet, daß die Recheneinheit im vorhinein nicht weiß, wann eine Nachricht abgehen kann. Entsprechendes gilt beim Empfang von Botschaften vom CAN-Bus. Hier führt der CAN-Controller den gesamten Empfangsvorgang autonom gem. der vorgesehenen Filterung aus und gibt keine Informationen über den exakten Empfangszeitpunkt an die zentrale Recheneinheit des zugeordneten Rechnerknoten. Die Zentraleinheit eines derartigen Rechnerknotens erhält deshalb weder direkt über Ausgangssignale des CAN-Controllers noch über die Objektebene zeitliche Informationen.

Die WO 90/13078 beschreibt eine Datenverarbeitungsanlage mit verteilten Rechnerknoten und einem seriellen Übertragungskanal, wobei eine Referenzeinheit Zeitinformationen aussendet und Untereinheiten ihre Echtzeituhren danach stellen. Die gesendeten Zeitinformationen enhalten die Referenz zeit zum Sendezeitpunkt sowie eine Synchronisierungsflanke.

Der Erfindung liegt die Aufgabe zugrunde, eine Möglichkeit anzugeben für ein Verfahren zum Betreiben von über einen Datenbus durch seriellen Datenaustausch miteinander kommunizierenden Rechnereinheiten mit jeweils einem eigenen Zeitgebersystem, wobei die Rechnereinheiten über den Datenbus Zeitinformationen austauschen, mit dem eine genaue Zeitbasis des Systems erzeugt werden kann.

Diese Aufgabe wird mit den Merkmalen des Patentanspruchs 1 gelöst. Die abhängigen Patentansprüche betreffen vorteilhafte Weiterentwicklungen der Erfindung.

Die Erfindung hat den Vorteil, daß sie in einer verteilten Datenverarbeitungsanlage die Einführung einer globalen Zeitbasis ermöglicht. Dabei greift die Erfindung auf das für den Austausch von Objekten vorgesehene Protokoll zurück, so daß keine zentrale Taktversorgung erforderlich ist. Mit Hilfe des globalen Zeitsystems ist die Berücksichtigung von Zeitverzögerungen zwischen einer Datensignalerzeugung und seiner Verarbeitung möglich. Somit können Totzeiten berücksichtigt werden und beispielsweise die Dynamik eines Regelkreises verbessert werden. Mit Hilfe der globalen Zeitbasis kann ein signalgenerierender Rechnerknoten zu einem Nachrichtenwert bzw. Signalwert einen Zeitwert übertragen, der aus seiner lokalen Zeitbasis in die globale Zeitbasis umgerechnet ist. Der oder die empfangenden Rechnerknoten, in denen die Verarbeitung des Nachrichtensignals stattfinden soll, können den übertragenen Zeitwert in ihre lokale Zeitbasis umrechnen und damit die Gesamtverzögerung zwischen der Signalgenerierung und der Signalverarbeitung bestimmen. Der Vorteil einer verteilten Datenverarbeitungsanlage, nahezu beliebig erweiterbar zu sein, bleibt ohne großen Aufwand erhalten. Das Verfahren der Erfindung kann vorteilhaft sowohl in einem "broadcast"-System als auch in einem Punkt-zu-Punkt"-System eingesetzt werden.

Ein wesentlicher Vorteil der Erfindung besteht darin, daß die Uhren der einzelnen Knoten nicht auf die Uhr eines bestimmten Knotens beispielsweise durch Verstellen der Zählerstände synchronisiert werden, sondern daß jeder Knoten sich die Zeit eines anderen Knotens durch eine Transformation errechnen kann. Die Erfindung gestattet, daß keine -kontinuierliche oder diskontinuierliche- Korrektur einer lokalen Zeit erfolgen muß, sondern daß jeder Knoten in der Lage ist, sich die aktuelle Zeit anderer Knoten auszurechnen. Dadurch besteht bei einer Mehrzahl von Knoten mit internen Uhren unterschiedlicher Stabilität für die stabileren Uhren, die lineare oder nahezu lineare Zeitänderungen aufweisen, eine weitgehende Synchronisation, wobei auch ungleiche Steigungen der Zeitänderung vorliegen können. Die durch ungleiche Zeitänderungen hervorgerufenen Unterschiede in den Uhren-Zählerständen können durch die Transformationen einfach wieder herausgerechnet werden.

Ausgestaltungen der Erfindung sind in den Unteransprüchen gekennzeichnet.

Die Erfindung wird nachfolgend anhand der Figuren der Zeichnung beschrieben. Es zeigen

Fig. 1     ein Prinzipschaltbild einer erfindungsgemäßen Datenverarbeitungsanlage.

Fig. 2     ein Diagramm zur Erläuterung der zeitlichen Verhältnisse, und

Fig. 3     ein Diagramm zur Erläuterung der Transformationsgleichungen.

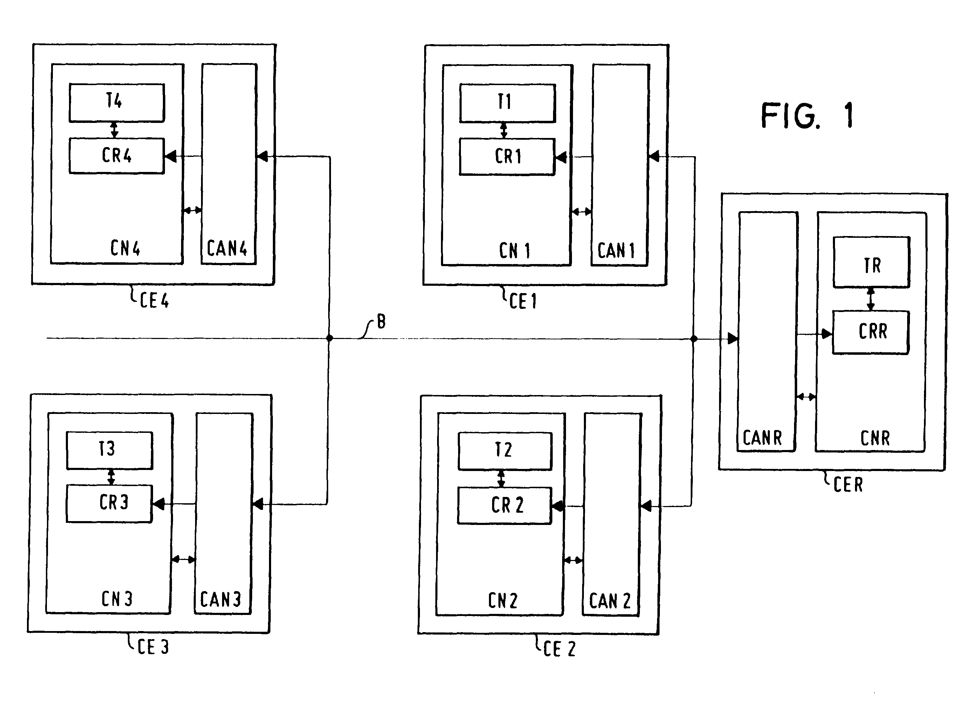

Gemäß Fig. 1 enthält eine Datenverarbeitungsanlage CAN-Einheiten CER und CEI bis CE4. Jede CAN-Einheit, die lediglich ein Ausführungsbeispiel darstellt, ist als sogenannte Basis-CAN-Implementierung ausgeführt. Das bedeutet, daß CAN-Controller CANR, und CAN1 bis CAN4 vorgesehen sind sowie Rechnerknoten CNR und CNI bis CN4. Die CAN-Controller übernehmen die Akzeptanzfilterung und die Eingangspufferung. Die Objektverwaltung und die Anwendung wird durch die Rechnerknoten durchgeführt. Die einzelnen CAN-Einheiten sind über einen Datenbus B miteinander verbunden. Die zwischen den einzelnen CAN-Einheiten ausgetauschten Botschaften bzw. Objekte gelangen vom Rechnerknoten über eine Objektebene und eine dem Rechnerknoten zugeordnete Transferebene auf den Datenbus B. Umgekehrt gelangen Objekte vom Datenbus über die Transferebene und die Objektebene an den Rechnerknoten. Nach der CAN-Struktur ist zwischen der Transferebene und dem Daten-Bus B noch die physikalische Ebene zwischengeschaltet.

Das betrachtete CAN-System arbeitet nach der "broadcast"-Methode. Die nachfolgend erläuterte Erfindung ist aber auch bei einem "Punkt-zu Punkt"-System möglich.

Gemäß der Erfindung kann jeder Knoten die eigene Uhrzeit mit der Uhrzeit der anderen Knoten vergleichen. Dazu gibt einer der Knoten eine Synchronisiernachricht an den Bus ab. Diese Synchronisiernachricht besteht wie andere Nachrichten aus einem Bit-Rahmen. Die Bits enthalten den Hinweis, daß es sich hierbei um eine Synchronisiernachricht handelt. Wenn die von einem Knoten abgeschickte Synchronisiernachricht mit oder ohne Priorität auf den Bus gelangt, empfangen alle anderen Knoten diese Synchronisiernachricht. Auf diese Nachricht hin halten alle anderen Knoten ihre momentanen Zählerstände fest. Die von einem Knoten abgegebene Synchronisiernachricht kann, muß aber nicht den eigenen Zählerstand des sendenden Knotens enthalten, sondern braucht lediglich eine Aufforderung zu sein, die Zeit festzuhalten.

Bei der Einspeisung einer Synchronisiernachricht, d. h. einer Aufforderung zur Zeitnahme, muß die Zeitnahme in jedem Knoten einschließlich des sendenden Knotens möglichst gleichzeitig und möglichst sicher erfolgen.

Eine Möglichkeit, höchste Genauigkeit bezüglich der Gleichzeitigkeit zu gewährleisten, besteht darin, den eigenen Zählerstand zum Zeitpunkt der Startflanke der empfangenen Nachricht festzuhalten. Zu diesem Zeitpunkt weiß keiner der empfangenden Knoten, ob es sich dabei um eine Aufforderung zur Synchronisation handelt. Dies kann erst festgestellt werden, wenn die vollständige Nachricht vorliegt, aus der erkennbar ist, ob es sich um eine Synchronisieraufforderung gehandelt hat. Ergibt die Auswertung der empfangenen Nachricht, daß es sich nicht um eine Synchronisiernachricht gehandelt hat, so wird der registrierte Zählerstand wieder gelöscht. Wenn dagegen die Auswertung der Nachricht ergibt, daß es sich um eine Synchronisiernachricht gehandelt hat, so wird der registrierte eigene Zählerstand festgehalten und kann nunmehr von dem empfangenden Knoten zu einem späteren Zeitpunkt in den Bus eingespeist werden.

Nach dem Speichervorgang geben die einzelnen Knoten die festgehaltenen Zählerstände an den Bus, so daß jeder andere Knoten nunmehr Kenntnis von den inneren Uhren der anderen Knoten hat.

In Bezug auf die höchste Genauigkeit ist es nicht zwingend erforderlich, auf die Startflanke eines Bitrahmens zu synchronisieren, sondern es sind auch andere Zeitpunkte innnerhalb des Rahmens denkbar und möglich, bei denen das Festhalten des Zählerstandes der inneren Uhr eines Knotens erfolgen kann.

Bei langen Rahmen sieht das CAN-Protokoll vor, daß nach der Startflanke des Rahmens eine nochmalige Synchronisation auf das Senderaster erfolgt, und zwar hardwaremäßig durch Triggern. Das bedeutet, daß das Abtastraster des empfangenden Rechnerknotens auf die Flanke eines vorbestimmten Bits im Rahmen an das Raster des empfangenden Rahmens angepaßt wird, was als "Hardsynchronisation" bezeichnet wird. Diese Hardsynchronisation ist notwendig, um zu vermeiden, daß das Abtastraster durch den Gangunterschied der sendenden Uhr und der empfangenden Uhr soweit von dem Raster des empfangenen Rahmens abweicht, daß eine Identifizierung der Bits, d. h. eine Auswertung des Rahmens nicht mehr möglich wäre. Das bedeutet, daß die lokalen Bit-Zeitzähler der empfangenden Knoten sowohl bei der Startflanke einer empfangenen Nachricht als auch bei einem Hardsynchronisationspunkt neu zu zählen beginnen. Unabhängig davon läuft die innere Uhr jedes Knotens weiter und wird nicht angehalten. Es wird aber entweder zum Zeitpunkt der Startflanke des empfangenen Rahmens oder zu einem Zeitpunkt der Hardsynchronisation der Zählerstand der inneren Uhr des Knotens festgehalten.

In jedem Fall wird der Zählerstand der inneren Uhr eines Knotens zu einem vorbestimmten Zeitpunkt festgehalten. Speziell bei CAN werden erst danach die gesamte Nachricht ausgewertet und Fehler korrigiert. Erst dann kann erkannt werden, ob es sich hierbei um eine Synchronisieraufforderung handelte.

Wenn ein Gleichgang der inneren Uhren gewährleistet ist, was in der Praxis aber nicht der Fall ist, reicht ein Zeitvergleich zu einem einzigen Zeitpunkt. Wenn die Zählgeschwindigkeiten der die inneren Uhren der einzelnen Knoten repräsentierenden Zähler unterschiedlich, aber gleichförmig, d.h. linear sind, so genügt die Übermittlung der Zählerstände zu zwei aufeinanderfolgenden Zeitpunkten. Wenn die Abhängigkeiten der Zählerstände von der Zeit nicht linear sind, dann sind mehr als zwei Zeitpunkte zur Verifizierung erforderlich.

Erfindungsgemäß ist jeder Knoten in der Lage, sich die aktuelle Zeit anderer Knoten auszurechnen. Also muß keine -kontinuierliche oder diskontinuierliche- Korrektur einer lokalen Zeit erfolgen. Dadurch besteht bei einer Mehrzahl von Knoten mit internen Uhren unterschiedlicher Stabilität für die stabileren Uhren, die lineare oder nahezu lineare Zeitänderungen aufweisen, eine weitgehende Synchronisation, wobei auch ungleiche Steigungen der Zeitänderung vorliegen können. Die durch ungleiche Zeitänderungen, d.h. Nichtlinearitäten hervorgerufenen Unterschiede in den Uhren-Zählerständen können durch die Transformationen einfach wieder herausgerechnet werden.

Man ist bemüht, bei einer Mehrzahl von Knoten einen oder zumindest wenige Knoten zu Master-Knoten zu erklären, und zwar den- oder diejenigen mit den stabilsten Uhren. Auf diese Weise kann man vermeiden, daß alle Knoten auf einen Synchronisationsaufruf hin ihre Zählerstände an den Bus melden müssen und den Bus mit Informationen übermäßig belasten. Wenn beispielsweise ein Knoten als Masterknoten ausgewählt wird, so muß nur dieser Masterknoten auf einen Synchronisationsaufruf hin seinen Zählerstand über den Bus an die anderen Knoten melden, und diese können dann ihre Zeit zur Masterzeit in Bezug setzen. Die übrigen Knoten können dann untereinander nach entsprechender Umrechnung mit der Masterzeit kommunizieren.

Wenn dennoch zunächst alle Knoten auf einen Synchronisationsaufruf hin ihre Zählerstände an den Bus und damit an die anderen Knoten melden sollen, so deshalb, um bei entsprechend vorgesehenem Protokoll auf diese Weise festzustellen, welcher Knoten bzw. welche Knoten diejenigen mit der stabilsten Uhr sind. Die Knoten können sich dann verständigen, welcher Knoten als Masterknoten ausgewählt werden soll. Danach kann dann die Relativierung der Zeitinformationen gemäß der Erfindung vorgenommen werden.

Erfindungsgemäß können von den in der eingangs genannten IEEE-Veröffentlichung genannten Fehlern die Fehler a), b) und d) vermieden werden. Damit ergibt sich eine wesentlich höhere Genauigkeit bei der Zeitmessung und somit eine globale Zeitbasis.

Die Erfindung vermeidet also, daß ein Knoten bei einem Synchronisationsaufruf sofort, d. h. innerhalb des gleichen Rahmens die eigene Zeit meldet und/oder daß die lokalen Uhren eingestellt bzw. verstellt werden. Erfindungsgemäß wird zunächst nur zur Zeitmessung aufgerufen, und danach wird entschieden, ob der Aufruf tatsächlich zur Zeitmessung dienen sollte. Wenn dies nicht der Fall war, wird die gemessene Zeit wieder gelöscht. Wenn dies der Fall war, wird die gemessene Zeit weitergespeichert und in einer späteren Informationslücke den anderen Knoten mitgeteilt.

Zur Erzeugung einer globalen Systemzeitbasis gemäß Figur 1 wird ein Rechnerknoten mit seiner lokalen Zeitbasis als Referenz-Rechnerknoten CNR mit einer Referenzzeitbasis ausgewählt. Der Referenz- oder Masterrechnerknoten CNR greift über seinen CAN-Controller CANR auf den Bus B zu. Eine vom Referenzrechnerknoten übermittelte Zeitsynchronisationsinformation wird von einem empfangenden Knoten dann erkannt, wenn die Zeitinformation in das Übertragungsprotokoll eingebunden wird. Anhand der Identifizierungsmöglichkeiten des Übertragungsprotokolls ist es möglich, zu erkennen, ob ein über den Bus übertragenes Objekt gültig ist oder nicht. Ein empfangender Knoten prüft ein ankommendes Objekt zunächst in der Transferebene, ob das Objekt gültig ist. In der Objektebene wird dann festgestellt, ob dieses Objekt eine Zeitinformation enthält.

Es ist vorgesehen, daß Informationen über den exakten Sende- bzw. Empfangszeitpunkt eines Objekts aus der Transferebene nach außen an den angeschlossenen Rechnerknoten weitergegeben wird. Die Implementierung erfolgt im CAN-Controller. Die Sende- bzw. Empfangsinformation der Transferebene wird entweder über die Objektebene und/oder über Ausgangssignale des CAN-Controllers an den Rechnerknoten weitergegeben.

Für die Erzeugung einer globalen Zeitbasis, d. h. die Synchronisierung der Rechnerknoten ist nach der Auswahl eines Rechnerknotens als Master- oder Referenz-Rechnerknoten vorgesehen, daß dieser Referenz-Rechnerknoten CNR ein Synchronisierungsobjekt aussendet, das im wesentlichen gleichzeitig an allen anderen Rechnerknoten empfangen wird. D.h., daß der Empfang von Objekten für alle Netzwerksknoten mit ausreichender Genauigkeit als gleichzeitig betrachtet werden kann. Die Absendung des Synchronisierungs-Objekts wird in der Transferebene des Referenz-Rechnerknotens und der Empfang des Synchronisierungs-Objekts wird in den Transferebenen der übrigen Rechnerknoten festgestellt. Alle Transferebenen geben eine Mitteilung an ihren zugeordneten Rechnerknoten. Auf die Mitteilung der Transferebenen hin speichert jeder Rechnerknoten seine lokale Zeit, also auch der Referenz-Rechnerknoten. Danacht wird in dem Referenz-Rechnerknoten festgestellt, wann das Synchronisierungsobjekt tatsächlich abgesandt worden ist. Alle anderen Rechnerknoten halten die Zeit fest, zu der das Synchronisierungs-Objekt bei ihnen eingetroffen ist. Später teilt der Referenz-Rechnerknoten den anderen Rechnerknoten seine gespeicherte Referenzzeit mit, zu der das Synchronisierungs-Objekt abgesandt worden ist. Die anderen Rechnerknoten teilen den anderen Knoten ebenfalls ihre gespeicherten Zeiten mit. Jede Rechnereinheit kann somit ihre Zeit bezüglich der Referenzzeit bzw. der Zeiten der anderen Knoten berechnen.

Es ist vorgesehen, daß eine Qualifizierung von Zeitinformationen aus der Transferebene durch Informationen aus der Objektebene erfolgten kann, d.h., daß die Weitergabe von Zeitinformationen aus der Transferebene an bestimmte Objekte geknüpft werden kann, die als Synchronisierungsobjekte bzw. Zeitvergleichsmitteilungen gekennzeichnet sind. Werden beispielsweise die Zeitinformationen aus der Transferebene über Ausgangssignale des CAN-Controllers direkt an den Rechnerknoten weitergegeben, so erzeugt der CAN-Controller Synchronsignale, die entweder unqualifiziert bei jedem über den Bus gehenden Objekt erzeugt werden, oder durch Informationen der Objektebene qualifiziert werden und nur bei bestimmten beispielsweise durch ihrn Kopfteil bzw. Identifier gekennzeichneten Objekten erzeugt werden. Der Ausgabezeitpunkt dieser Mitteilungen bzw. Synchronisationsinformation des CAN-Controllers an den zugeordneten Rechnerknoten hat dabei eine vorgegebene zeitliche Zuordnung zum Startbit eines Objektrahmens. Damit wird berücksichtigt, daß das Startbit eines Objekts bzw. eines Synchronisierungsobjekts des Referenz-Rechnerknotens das Bit ist, auf das sich alle im protokollgemäßen Objektrahmen enthaltenen Bits aufsynchronisieren. Das bedeutet, daß die Bitflanke des Startbits die genaueste Flanke in einem Objektrahmen ist. Das Startbit eines Objektrahmens gibt deshalb zunächst ein unqualifiziertes Zeitsignal, dessen Qualifizierung durch den Inhalt des Objekts möglich ist. In der Transferebene wird deshalb festgestellt, daß es sich um eine gültige Mitteilung handelt, während die Objektebene feststellt, daß es sich um ein Zeitobjekt handelt. Ein empfangender Rechnerknoten kann deshalb zu jedem Eingang eines Objekts die Lokalzeit feststellen und diese speichern.

Wenn nach der Identifizierung des Objekts feststeht, daß dieses keine vom Referenz-Rechnerknoten ausgesandte Zeitinformation enthält, wird die gespeicherte lokale Zeit des Empfangsknotens gelöscht. Wir dagegen festgestellt, daß es sich um eine Zeitinformation handelt, wird der Löschmechanismus außer Kraft gesetzt, so daß die lokale Zeit weiterhin gespeichert wird. Mit der Mitteilung der Referenzzeit bzw. der Zeiten der anderen Rechner erfolgt die zeitliche Zuordnung der lokalen Zeit.

Grundsätzlich braucht jeder Rechnerknoten bei stabilen Uhren nur die Kenntnis seiner eigenen Zeit und der Referenzzeit bzw. der anderen Zeiten. Aus der Kenntnis dieser Zeiten kann er künftige lokale Zeiten in Relation zur Referenzzeit extrapolieren. Diese Eigenschaft gilt für jeden Knoten. Jeder Rechnerknoten kann damit seine auf den Bus zu übertragenden Objekte mit einer Zeitinformation versehen, die auf der Basis der Referenzzeit ausgerechnet worden ist. Sowohl ein Sendeknoten als auch die angeschlossenen Empfangsknoten können also ihre Zeitinformationen auf ein und dasselbe Ereignis, nämlich die Referenzzeit des Referenz-Rechnerknotens beziehen. Vorausgesetzt ist dabei, daß alle Botschaften bzw. Objekete hinreichend zeitgleich bei allen Netzwerksknoten auftreten.

Die Zeitbasis eines CAN-Rechnerknotens besteht in der Regel aus einem mit einer bestimmten Frequenz schwingenden Oszillator und einem Zähler. Da die Frequenzen der einzelnen Oszillatoren üblicherweise voneinander abweichen, weichen auch die Zeitbasen der Rechner voneinander ab. Wenn nach einem Synchronisationsobjekt und der Mitteilung bzw. dem Synchronisationssignal der Transferebene an den Rechnerknoten der Synchronisationszeitpunkt feststeht, kann jeder Rechnerknoten bei Kenntnis der Frequenz der anderen Zähler ausgehend von der Referenzzeit für die Zukunft die eigene Zeit sowie die Relation zu den lokalen Zeiten der anderen Knoten ausrechnen. Wenn die Frequenzen der Zeitbasen der anderen Rechnerknoten nicht bekannt sind, müssen zwei Synchronisationsvorgänge hintereinander vorgenommen werden, um die lokalen Zeitbasen der jeweiligen Rechnerknoten feststellen zu können. Dabei ist in erster Näherung angenommen, daß die Zählerstände in der Zeitbasen der Rechnerknoten in erster Näherung lineare Funktionen der Zeit bilden. Eventuelle Nichtlinearitäten der Zeitbasen der einzelnen Rechnerknoten werden dadurch berücksichtigt, daß das Verfahren der Synchronisation in zeitlichen Abständen wiederholt wird.

In einer in Fig. 1 dargestellten bevorzugten Ausführungsform der Rechnerknoten enthält jeder Knoten einen Zeitgeber TR sowie T1 bis T4 und ein Capture-Register CRR sowie CR1 bis CR4. Wie symbolisch angedeutet, gibt ein CAN-Controller beim Empfang eines Objekts vom Bus B an das zugeordnete Capture-Register CRi den Befehl, die Momentanzeit des zugeordneten Zeitgebers Ti festzuhalten. Das Festhalten erfolgt mit dem Startimpuls des empfangenen Objektrahmens. Wenn nach der Auswertung des Objektrahmens feststeht, daß dieser eine Zeitinformation enthält, bleibt die festgestellte lokale Zeit des Zeitgebers Ti gespeichert, ansonsten wird sie gelöscht. Da Buslaufzeiten voraussetzungsgemäß keine Rolle spielen sollen, so daß Objekte auf dem Bus im wesentlichen gleichzeitig an allen Netzwerksknoten anliegen, ergeht der Befehl des CAN-Controllers jedes Rechnerknotens zum Festhalten der Zeit bzw. die entsprechende Mitteilung der Transferebene an den Rechnerknoten und die darauffolgende Speicherung der lokalen Zeit in allen Rechnerknoten im wesentlichen gleichzeitig.

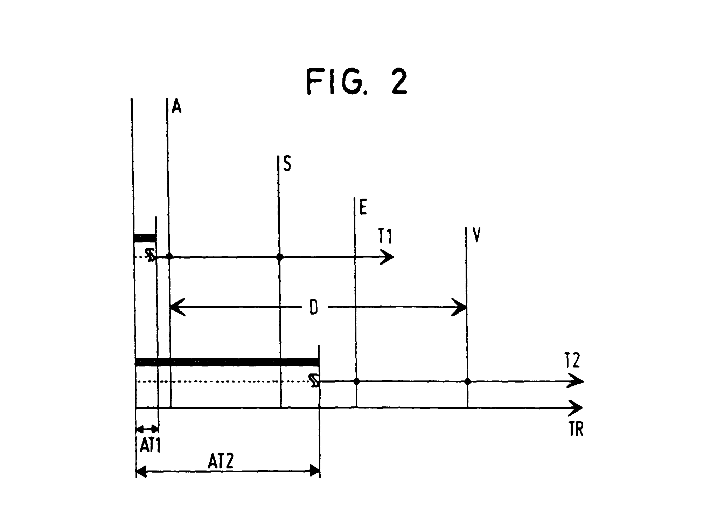

Das Diagramm gem. Fig.2 erläutert die zeitlichen Verhältnisse bei der Sendung eines Objekts vom Rechnerknoten CAN1 zum Rechnerknoten CAN2 unter Berücksichtigung der globalen Zeitbasis des Rechnerknotens CNR. Der Rechnerknoten CAN1 mit seiner Zeitbasis T1, die bezogen auf die Zeitbasis TR die Differenz $\Delta T1$ aufweist, erzeugt zum Zeitpunkt A ein Abtastsignal eines Sensors. Dieses Abtastsignal wird unter Berücksichtigung seiner Priorität zum Zeitpunkt S auf den Bus ausgegeben und zum Zeitpunkt E an der CAN-Einheit CE2 empfangen. Diese Einheit besitzt die Zeitbasis T2, die bezüglich der Referenzzeit TR die Differenz $\Delta T2$ aufweist. Das zum Zeitpunkt E empfangene Objekt wird zum Zeitpunkt V verarbeitet. Die Zeitdifferenz zwischen der Generierung eines Abtastsignals zum Zeitpunkt A und der Verarbeitung seiner Information zum Zeitpunkt V beträgt damit D. Die Erfindung ermöglicht dem empfangenden Rechnerknoten nicht nur, die Empfangszeit des Objekts und seine Verarbeitung festzustellen, sondern auch den Zeitpunkt der Aussendung des Objekts auf dem Rechnerknoten auf der Grundlage der Systemzeitbasis festzustellen, wenn dieser Rechnerknoten ihm den Absendezeitpunkt A bezogen auf die Systemzeitbasis mitgeteilt hat. Damit kann die Gesamtverzögerungszeit D beispielsweise bei einer Regelung berücksichtigt werden.

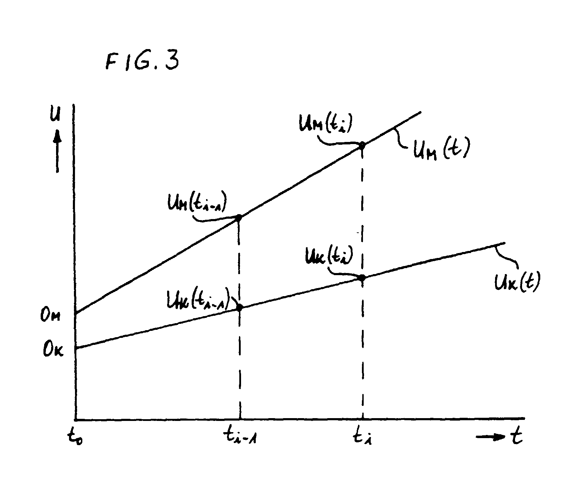

Figur 3 zeigt ein Beispiel für die Transformationsgleichungen bei zwei linear zeitabhängigen Uhren zweier Rechnereinheiten. Für die Knoten M und K ergeben sich Uhrzeiten U, die mit Geradengleichungen beschreibbar sind, wobei $\Delta$ die Steigung, t die Zeit und O ein Anfangswert oder Offset ist:

$$U_M(t) = \Delta_M \cdot t + O_M$$

$$U_K(t) = \Delta_K \cdot t + O_K.$$

Nach zwei Zeitnahmen an den angenommenen Zeitpunkten $t_i$ und $t_{i-1}$ kann der Rechnerknoten K mit Hilfe der gespeicherten Uhrenwerte $U_K(t_i)$ und $U_K(t_{i-1})$ sowie den übertragenen Uhrenwerten $U_M(t_i)$ und $U_M(t_{i-1})$ des Knotens M folgende Transformationsgleichungen berechnen:

$$\Delta_{K,M} = \Delta_M \frac{U_K(t_i) - U_K(t_{i-1})}{U_M(t_i) - U_M(t_{i-1})}$$

und

$$O_{K,M} = U_K(t_{i-1}) - \Delta_{K,M}(t_{i-1} - t_0).$$

Entsprechende Gleichungen gelten für den Rechnerknoten M, der mit Hilfe seiner gespeicherten Zeitpunkte und den übertragenen Zeitpunkten des Knotens K berechnen kann:

$$\Delta_{M,K} = \Delta_K \frac{U_M(t_i) - U_M(t_{i-1})}{U_K(t_i) - U_K(t_{i-1})}$$

und

$$O_{M,K} = U_M(t_{i-1}) - \Delta_{M,K}(t_{i-1} - t_0).$$

Aus den Gleichungen und Figur 3 ergibt sich in einleuchtender Weise, warum jeder beteiligte Rechnerknoten die Zeitwerte bei den Zeitnahmen abspeichern muß.

Die Erzeugung einer globalen Zeitbasis in der Praxis wird anhand einer qualifizierten Zeitinformation erläutert. Eine Zeitinformation des Referenz-Rechnerknotens in einem abgesendeten Objekt enthält innerhalb des Objektrahmens einen Kopfteil (Indentifier), dem eine vorgegebene Nummer zugeteilt ist. Der Kopfteil signalisiert den empfangenden Knoten, daß es sich um eine Zeitvergleichsbotschaft handelt. Eine Priorisierung der Botschaft ist möglich. Diese Vereinbarung gilt für alle Rechnerknoten gemeinsam. Es ist vorteilhaft, mit einem ersten Objekt des Referenz-Rechnerknotens die Synchronisationseinrichtungen der angeschlossenen Rechnerknoten zu aktivieren. Nach Empfang des ersten Zeitobjekts reagiert jeder Rechnerknoten mit seiner Synchronisationseinrichtung auf jeden Startimpuls eines empfangenen Objekts. Mit dem Empfang eines zweiten Objekts, weiß jeder Rechnerknoten, daß der Startimpuls derjenige Zeitpunkt ist, auf den zu synchronisieren ist. Damit wird der Löschmechanismus beispielswese im Capture-Register außer Kraft gesetzt, so daß kein neuer lokaler Zeitwert festgehalten wird. Mit einem dritten Objekt des Referenz-Rechnerknotens wird die Sende-Referenzzeit dieses Knotens mitgeteilt.

Mit Hilfe der Erfindung ist es möglich, in einer verteilten Datenverarbeitungsanlage eine globale Zeitbasis zu installieren, mit der Zeitinformation über Objekte knotenübergreifend behandelt werden können. Die dazu notwendigen Synchronisierungsmechanismen werden mit Hilfe des Datenübenragungsprotokolls festgelegt. Bei einer derartigen Implementierung können dann die zur Verfügung gestellten Zeitinformationen direkt über den seriellen Daten-Bus gewonnen werden, ohne daß eine zentrale Taktversorgung erforderlich ist. Der Vorteil einer problemlosen Erweiterung der verteilten Datenverarbeitungsanlage bleibt somit erhalten.

## Patentansprüche

1. Verfahren zum Betreiben von über einen Datenbus durch seriellen Datenaustausch miteinander kommunizierenden Rechnereinheiten, von denen jede ein eigenes Zeitgebersystem aufweist, wobei die Rechnereinheiten über den Datanbus Zeitinformationen austauschen und

   a) in den Datenbus ein Zeitregistrierungs-Startsignal eingespeist wird,

   dadurch **gekennzeichnet,**

   b) daß jede Rechnereinheit bei Identifizierung des Zeitregisrierungs-Startsignals den eigenen Zeitwert lokal speichert,
   c) daß jede Rechnereinheit den gespeicherten eigenen Zeitwert zu einem späteren Zeitpunkt an die anderen Rechnereinheiten überträgt,
   d) daß jede Rechnereinheit die von anderen Rechnereinheiten empfangenen Zeitwerte speichert, und
   e) daß jede Rechnereinheit den eigenen gespeicherten Zeitwert mit den gespeicherten Zeitwerten der anderen Rechnereinheiten vergleicht und unter Berücksichtigung des eigenen aktuellen Zeitwertes den aktuellen Zeitwert der anderen Rechnereinheiten berechnet.

2. Verfahren nach Anspruch 1,
   dadurch **gekennzeichnet,**

   a) daß zwei oder mehrere Zeitregistrierungs-Startsignale zu aufeinanderfolgenden Zeitpunkten in den Datenbus eingespeist werden,
   b) daß jede Rechnereinheit bei Identifizierung der Zeitregistrierungs-Startsignale die entsprechenden eigenen Zeitwerte speichert,

c) daß jede Rechnereinheit die gespeicherten eigenen Zeitwerte zu einem späteren Zeitpunkt oder zu späteren Zeitpunkten an die anderen Rechnereinheiten überträgt,

d) daß jede Rechnereinheit die von den anderen Rechnereinheiten empfangenen Zeitwerte speichert,

e) und daß jede Rechnereinheit die eigenen gespeicherten Zeitwerte mit den gespeicherten Zeitwerten der anderen Rechnereinheiten vergleicht und unter Berücksichtigung des eigenen aktuellen Zeitwertes den aktuellen Zeitwert der anderen Rechnereinheiten berechnet.

3. Verfahren nach Anspruch 1 oder 2,
dadurch **gekennzeichnet,** daß das Zeitregistrierungs-Startsignal bzw. die Zeitregistrierungs-Startsignale von einer der Rechnereinheiten in den Datenbus eingespeist wird bzw. werden.

4. Verfahren nach Anspruch 2 oder 3,
dadurch **gekennzeichnet,** daß als Zeitregistrierungs-Startsignal ein charakteristischer Teil einer Datenserie verwendet wird.

5. Verfahren nach Anspruch 4,
dadurch **gekennzeichnet,** daß der ein Zeitregistrierungs-Startsignal enthaltenden Datenserie Verifizierungsdaten für das Zeitregistrierungs-Startsignal beigefügt werden.

6. Verfahren nach Anspruch 5,
dadurch **gekennzeichnet,** daß jede Rechnereinheit den eigenen Zeitwert, der bei Erscheinen eines Zeitregistrierungs-Startsignals auf dem Datenbus gespeichert worden ist, wieder löscht, wenn die Rechnereinheit keine zu dem Zeitregistrierungs-Startsignal gehörende Verifizierungsdaten feststellt.

7. Verfahren nach Anspruch 4,
dadurch **gekennzeichnet,** daß als Zeitregistrierungs-Startsignal die erste Impulsflanke einer Datenserie verwendet wird.

8. Verfahren nach Anspruch 4,
dadurch **gekennzeichnet,** daß - wenn bei einer längeren Datenserie zur Bit-Identifizierung der empfangenen Daten eine Hardware-Synchronisation des von der empfangenden Rechnereinheit erzeugten Impulsrasters durch ein in der Datenserie enthaltenes Synchronisiersignal vorgesehen ist - als Zeitregistrierungs-Startsignal das Synchronisiersignal verwendet wird.

**Claims**

1. A method of operating computer units communicating with one another over a data bus by serial data exchange, of which each has its own clock system, wherein the computer units exchange time information over the data bus and

a) a time-registering start signal is applied to the data bus,

characterized in that,

b) each computer unit stores locally its own time value on identifying the time-registering start signal,

c) each computer unit transmits the stored own time value at a later point in time to the other computer units,

d) each computer unit stores the time values received from other computer units, and

e) each computer unit compares its own stored time value with the stored time values of the other computer units and computes the current time value of the other computer units taking into account its own current time value.

2. A method according to claim 1, characterized in that

a) two or more time-registering start signals are applied to the data bus at sequential points in time,

b) each computer unit stores the corresponding own time values on identifying the time-registering start signals,

c) each computer unit transmits the stored own time values at a later point in time or later points in time to the other computer units,

d) each computer unit stores the time values received from the other computer units,

e) each computer unit compares its own stored time values with the stored time values of the other computer units and computes the current time value of the other computer units taking into account its own current time value.

3. A method according to claim 1 or 2, characterized in that the time-registering start signal or time-registering start signals is or are applied to the data bus from one of the computer units.

4. A method according to claim 2 or 3, characterized in that a characteristic part of a data sequence is used as the time-registering start signal.

5. A method according to claim 4, characterized in that verifying data for the time-registering start signal is added to the data sequence containing a time-registering start signal.

6. A method according to claim 5, characterized in that each computer unit erases again the own time value which has been stored on appearance of a time-registering start signal on the data bus, when the computer unit does not detect verifying data pertaining to the time-registering start signal.

7. A method according to claim 4, characterized in that the first pulse flank of a data sequence is used as a time-registering start signal.

8. A method according to claim 4, characterized in that - when hardware synchronisation of the pulse raster generated by the receiving computer unit through a synchronising signal contained in the data sequence is provided for a longer data sequence for the bit identification of the received data - the synchronising signal is used as the time-registering start signal.

**Revendications**

1. Procédé d'exploitation d'unités de calcul qui communiquent entre elles par échange en série de données par l'intermédiaire d'un bus de données et qui présentent chacune un système d'horloge propre, les unités de calcul échangeant des informations de temps par l'intermédiaire du bus de données et

a) un signal de démarrage d'enregistrement de temps étant entré dans le bus de données,

caractérisé en ce

b) que chaque unité de calcul mémorise localement la propre valeur de temps lors de l'identification du signal de démarrage d'enregistrement de temps,
c) que chaque unité de calcul transmet à un instant ultérieur la propre valeur de temps mémorisée aux autres unités de calcul,
d) que chaque unité de calcul mémorise les valeurs de temps transmises par d'autres unités de calcul, et
e) que chaque unité de calcul compare la propre valeur de temps mémorisée aux valeurs de temps mémorisées des autres unités de calcul et calcule la valeur de temps actuelle des autres unités de calcul en prenant en compte la propre valeur de temps actuelle.

2. Procédé selon la revendication 1, caractérisé en ce

a) que deux signaux de démarrage d'enregistrement de temps ou plus sont entrés en des instants successifs dans le bus de données,
b) que chaque unité de calcul mémorise les valeurs de temps propres correspondantes lors de l'identification des signaux de démarrage d'enregistrement de temps,
c) que chaque unité de calcul transmet les propres valeurs de temps mémorisées aux autres unités de calcul à un instant ultérieur ou à des instants ultérieurs,
d) que chaque unité de calcul mémorise les valeurs de temps transmises par les autres unités de calcul,
e) et que chaque unité de calcul compare les propres valeurs de temps mémorisées aux valeurs de temps mémorisées des autres unités de calcul et calcule la valeur de temps actuelle des autres unités de calcul en prenant en compte la propre valeur de temps actuelle.

3. Procédé selon la revendication 1 ou 2, caractérisé en ce que le signal ou les signaux de démarrage d'enregistrement de temps est ou sont entré(s) dans le bus de données par l'une des unités de calcul.

4. Procédé selon la revendication 2 ou 3, caractérisé en ce qu'une partie caractéristique d'une série de données est utilisée comme signal de démarrage d'enregistrement de temps.

5. Procédé selon la revendication 4, caractérisé en ce que des données de vérification du signal de démarrage d'enregistrement de temps sont ajoutées à la série de données contenant un signal de démarrage d'enregistrement de temps.

6. Procédé selon la revendication 5, caractérisé en ce que chaque unité de calcul efface de nouveau la valeur de temps propre qui a été mémorisée lors de l'apparition d'un signal de démarrage d'enregistrement de temps sur le bus de données lorsque l'unité de calcul ne détecte aucune donnée de vérification faisant partie du signal de démarrage d'enregistrement de temps.

7. Procédé selon la revendication 4, caractérisé en ce que le premier flanc d'impulsion d'une série de données est utilisé comme signal de démarrage d'enregistrement de temps.

8. Procédé selon la revendication 4, caractérisé en ce que lorsque avec une série de données assez longue, il est prévu pour l'identification de bits des données reçues une synchronisation-système (hardware) du réseau d'impulsions produit par l'unité de calcul réceptrice par un signal de synchronisation contenu dans la série de données, on utilise le signal de synchronisation comme signal de démarrage d'enregistrement de temps.

FIG. 1

# FIG. 2

FIG. 3